(19) **Europäisches Patentamt**

**European Patent Office**

**Office européen des brevets**

(11) Veröffentlichungsnummer : **0 023 548**
**B1**

(12) **EUROPÄISCHE PATENTSCHRIFT**

(45) Veröffentlichungstag der Patentschrift :
08.02.84

(21) Anmeldenummer : **80103264.0**

(22) Anmeldetag : **12.06.80**

(51) Int. Cl.³ : **B 01 D 35/14// B01D27/08,**
**B01D27/10, B01D29/24**

(54) Mehrteiliges Filtergehäuse zur Aufnahme von mehreren patronenförmigen Filterelementen.

(30) Priorität : 15.06.79 DE 7917272 U
15.06.79 DE 7917271 U

(43) Veröffentlichungstag der Anmeldung :
11.02.81 Patentblatt 81/06

(45) Bekanntmachung des Hinweises auf die Patenterteilung : 08.02.84 Patentblatt 84/06

(84) Benannte Vertragsstaaten :
DE FR GB

(56) Entgegenhaltungen :
DE-A- 2 633 850
DE-C- 305 845
DE-C- 1 099 995
DE-U- 1 942 542
US-A- 3 406 831
US-A- 3 473 663
US-A- 3 793 803

(73) Patentinhaber : Sartorius GmbH.
Weender Landstrasse 94-108
D-3400 Göttingen (DE)

(72) Erfinder : Pett, Manfred
Heiligenstädter Strasse 81
D-3407 Gleichen-Bremke (DE)

(74) Vertreter : Köhler, Rudolf
c/o Sartorius GmbH Weender Landstrasse 94-108
D-3400 Göttingen (DE)

Mehrteiliges Filtergehäuse zur Aufnahme von mehreren patronenförmigen Filterelementen

Die Erfindung betrifft ein mehrteiliges Filtergehäuse, welches mit elastischen Dichtungen gegeneinander abgedichtete Bauteile aufweist, insbesondere zur Sterilfiltration von Fluiden, mit einer von außen sichtbaren Leckkontrolleinrichtung für vom Trübraum in den Sterilraum ragende, von Gehäusedurchbrechungen und elastischen Dichtungen umschlossene Stutzen, wobei mehrere patronenförmige Filterelemente mit ihrer Filtereinlaßseite in den von einem glockenförmigen Gehäuseteil gebildeten Trübraum ragen und deren Stutzen auf der Auslaßseite von Durchbrechungen in einer Zwischenwand von Trübraum und Filtratraum dichtend gehalten sind.

Bei einem bekannten Filtergehäuse dieser Bauart (DE-C-305 845) it die Zwischenwand hohl ausgebildet und weist einen nach der Außenseite des Gehäuses führenden Rohranschluß auf. Die als Stutzen ausgebildeten Endkappen der Filterelemente durchsetzen die hohle Zwischenwand und sind auf beiden Seiten der Zwischenwand durch je eine Ringdichtung eingefaßt. Erfolgt eine Beschädigung oder Undichtigkeit der zum Trübraum weisenden Ringdichtung, so tritt die aus dem Trübraum stammende Leckflüssigkeit in den Hohlraum der Zwischenwand und kann aus diesem nach außen abgeführt werden. Diese Leckkontrolleinrichtung besteht somit darin, daß sämtliche Filterelemente mit ihrer kritischen Abdichtungsstelle in einer Zwischenkammer enden, so daß auftretende Leckflüsse in dieser Zwischenkammer gesammelt und nach außen abgeführt werden können. Über das an die Zwischenkammer angeschlossene Sammelrohr ist von außen zwar sichtbar, ob die Dichtungen einzelner Filterelemente undicht sind und Leckverluste auftreten, es ist jedoch keinesfall möglich, von außen während des Filtrationsvorganges und auch später beim Öffnen der Zwischenkammer die Leckstelle einem ganz bestimmten Filterelement zuzuordnen. Dies ist jedoch für die sofortige oder nachträgliche Kontrolle der Filterelemente und zum Auffinden der Schadstelle wichtig. Bei dieser bekannten Gehäusekonstruktion wird eine Sekundärkontamination zwischen Trübraum und Sterilraum in bezug auf den Einlaßstutzen für die Trübe dadurch vermieden, daß dieser Einlaßstutzen direkt von außen in das den Trübraum umgebende Gehäuseteil eingeführt ist, ohne daß dieser Einlaßstutzen mit dem Filtratraum in Kontakt tritt.

Bei Anordnung von nur einem Filterelement in einem Gehäuse ist das Problem einer individuellen Leckkontrolleinrichtung bereits gelöst, indem die Endkappe mit einer Dichtlippe ausgestattet ist, die bis an den Gehäuseaußenrand reicht und damit den Trübraum vom Sterilraum trennt (US-PS 4 126 559).

Die Gefahr auftretender Undichtigkeiten steigt natürlich mit der Zahl der in einem Filtergehäuse angeordneten Filterelemente, wenn das Gehäuse z. B. wie in der US-PS 4 248 714 aufgebaut ist. Bei einem solchen Aufbau besteht zusätzlich auch noch die Gefahr einer Sekundärkontamination im Bereich des Zulaufstutzens für die Trübe. Bei diesem bekannten Filtergehäuse ist das Hauptgehäuseteil topfartig ausgebildet, wobei der Topfboden sowohl den damit verschweißten Einlaßstutzen als auch den Auslaßstutzen aufnimmt. Der Sterilraum ist durch den Topfboden und durch einen ringförmigen Zwischenboden mit zwei konzentrisch angeformten Kragen gebildet, die durch Dichtungen sowohl den Einlaßstutzen als auch den großen Trübraum vom Sterilraum abdichten. Bei einer Beschädigung der Dichtungen kann also unsteriles Fluid aus dem Trübraum bzw. dem Einlaßstutzen in den Sterilraum und damit auch in den Auslaßstutzen eintreten, ohne daß dabei die Leckstelle feststellbar und lokalisierbar ist.

Der Erfindung liegt daher die Aufgabe zugrunde, mit einfachen Mitteln bei einem mehrteiligen Filtergehäuse zur Aufnahme von mehreren patronenförmigen Filterelementen eine Leckkontrollvorrichtung der eingangs geschilderten Art so zu verbessern, daß auftretende Leckstellen und Leckverlust leicht feststellbar sind und bereits steriles Filtrat nicht wieder durch Leckverluste unsteril wird.

Diese Aufgabe wird erfindungsgemäß dadurch gelöst, daß jede einzelne Gehäusedurchbrechung, welche einen aus dem Trübraum heraus in den Filtratraum ragenden Stutzen der Filterelemente bzw. der Gehäusebauteile elastisch dichtend haltert, eine eigene separate Leckkontrollstelle aufweist, die auf der Gehäuseaußenseite endet.

Für die Filterelemente ist die Leckkontrollstelle in einer Durchbrechung der Zwischenwand durch einen Leckkontrollkanal gebildet, der den Bereich der Durchbrechung zwischen zwei im axialen Abstand angeordneten Ringdichtungen mit der Gehäuseaußenseite verbindet.

Die Zwischenwand zwischen dem Trübraum und Filtratraum, welche mit den Durchbrechungen für die Stutzen der Filterelemente ausgestattet ist, ist als einstückige Zwischenplatte mit einem integrierten rohrförmigen Stutzen als Einlaß für das zu filtrierende Medium ausgebildet, wobei die Zwischenplatte im axialen Abstand zu einer den Filtratraum begrenzenden Basisplatte angeordnet ist und sich peripher auf dieser dichtend abstützt, wobei der Stutzen der Zwischenplatte die Basisplatte unter Einschluß einer elastischen Dichtung in einer Durchbrechung durchstößt und den Einlaß zum glockenförmigen Gehäuseteil des Trübraumes bildet, wobei die Leckkontrollstelle durch den aus der Gehäuseaußenseite austretenden Stutzen mit Dichtung gebildet ist und gleichermaßen von außen einsehbar und kontrollierbar ist.

Durch die Anordnung der Durchbrechung in der Basisplatte und die absolut dichte Ausbildung von Zwischenplatte und Stutzen kann kein unfiltriertes Medium vom Oberteil in den Sterilraum dringen. Sollte dagegen die Dichtung zwischen Stutzen und Basisplatte undicht werden, so ist dies unschädlich, da der Flüssigkeitsdruck im Sterilraum einerseits nicht so groß ist, daß größere Leckmengen durch die Dichtung austreten, andererseits aber groß genug ist, um eine Sekundärkontamination von außen in den Sterilraum zu verhindern. Außerdem ist die Leckstelle einwandfrei erkennbar, so daß Abhilfe erfolgen kann.

Dies gilt auch für jede Leckkontrollstelle, die einem Filterelement zugeordnet ist. Tritt tatsächlich im Bereich der Ringdichtungen eine Leckstelle auf, so kann das unsterile Medium aus dem Gehäuseoberteil nicht in den darunter liegenden Sterilraum eintreten, sondern wird vielmehr durch den Ringkanal und den Leckkontrollkanal an die Gehäuseaußenseite geführt, wo es sichtbar wird und die Leckstelle einem bestimmten Filterelement zugeordnet werden kann. Da auch die unmittelbar den Sterilraum abschließende stromabwärts letzte Ringdichtung so ausgelegt ist, daß sie einem Flüssigkeitsdruck standhält, kann die im Ringkanal befindliche drucklose Leckflüssigkeit diese Ringdichtung nicht überwinden.

Der Erfindungsgedanke ist in einem Ausführungsbeispiel anhand der beiliegenden Zeichnung erläutert. Dabei zeigt :

Figur 1 einen Vertikalschnitt durch das Gehäuse in einem interessierenden Ausschnitt und

Figur 2 einen Vertikalschnitt als Übersicht zu Fig. 1, und

Figur 3 einen Detailschnitt durch den Leckkontrollkanal mit Ringraum und einer als Stutzen ausgebildeten Endkappe mit Dreifachdichtung als Variante zu Fig. 1.

Das mehrteilige Gehäuse besteht im wesentlichen aus dem glockenförmigen Gehäuseteil 1, der Zwischenplatte 9 und der schüsselförmigen Basisplatte 12, die an ihrer Peripherie unter Einschluß von Dichtungen 16, 17 mit Hilfe von Spannmitteln 14 dichtend miteinander verbunden sind.

Die Zwischenplatte 9 weist einen rohrförmigen Stutzen 11 auf, der mit dieser verschweißt, in jedem Fall dauerhaft dicht verbunden ist und den nach unten durch die Basisplatte 12 hindurchgeführten Einlaß 10 bildet, der in das Gehäuseoberteil 1 mündet.

Die Basisplatte 12 ist schüsselförmig ausgebildet. Der zugehörige Kragen 13 kann selbstverständlich auch an der Zwischenplatte 9 nach unten angeformt sein, um den Filtratraum 22 zu bilden. Bei der Sterilfiltration übernimmt dieser Raum die Funktion des Sterilraumes. Dieser weist einen Auslaßstutzen 19 auf.

Die Außenseite des Stutzens 11 trägt im Bereich der Durchbrechung 23 der Basisplatte eine O-Ringdichtung 15 und dient gleichzeitig als sichtbare Leckkontrollstelle.

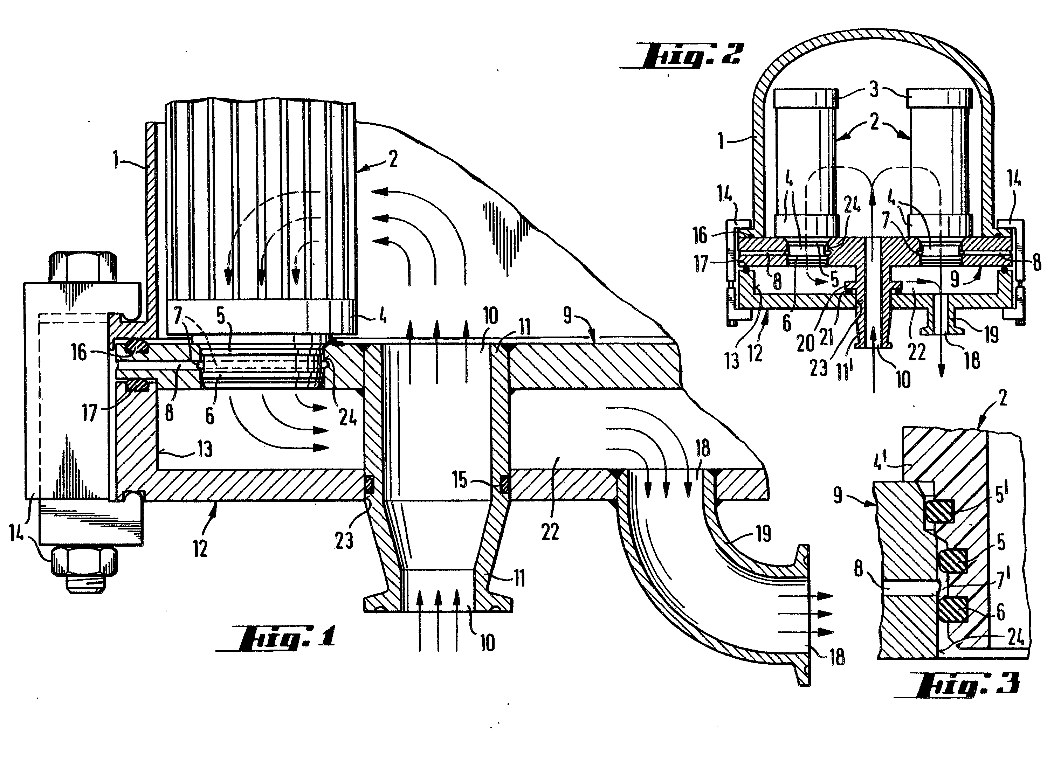

In der Ausführungsform gemäß Fig. 2 ist am Außenmantel des Stutzens 11′ ein Flansch 20 angeordnet, der sich mit einer Dichtung 21 auf den Oberrand der Basisplatte 12 im Bereich der Durchbrechung 23 aufsetzt und ebenfalls unter dem Einfluß der Spannmittel 14 steht. Filtrat kann also, wenn überhaupt, an dieser Stelle aus dem Filtratraum 22 austreten, ohne daß die Gefahr einer Sekundärkontamination für das Sterilfiltrat besteht.

Das eigentliche patronenförmige Filterelement 2 ragt mit seiner geschlossenen Endkappe 3 in das Gehäuseoberteil und mit seiner Endkappe 4 in Form eines Stutzens in eine Durchbrechung 24 der Zwischenplatte 9 hinein und ist in diesem Bereich mit mindestens zwei Ringdichtungen 5 und 6 ausgestattet, die mit axialem Abstand auf der Außenseite des Stutzens fixiert sind und damit den glockenförmigen Raum des Gehäuseoberteils 1 gegenüber dem Filtratraum 22 abdichten.

Zumeist sind mehrere, z. B. 20, solcher Filterelemente 2 auf der Peripherie der Zwischenplatte 9 verteilt angeordnet, wodurch die Gefahr von Leckstellen an den Endkappen 4 zunimmt. Damit nicht unkontrolliert zu filtrierendes Medium an den beiden Ringdichtungen 5 und 6 vorbei in den Filtratraum 22, insbesondere bei der Sterilfiltration dringt, ist im Bereich zwischen den beiden Ringdichtungen 5 und 6 in jeder Durchbrechung 24 mindestens ein Leckkontrollkanal 8 angeordnet, der auf der Gehäuseaußenseite der Zwischenplatte 9 endet und damit einsehbar ist. Im Freiraum zwischen den beiden Ringdichtungen 5 und 6 ist ein Ringkanal 7′ entweder in der Endkappe 4 gemäß Fig. 3 oder wie in Fig. 1 dargestellt als 7 in der Wandung der Durchbrechung 24 der Zwischenplatte 9 eingelassen, in welchem der Leckkontrollkanal 8 endet.

Tritt tatsächlich infolge beschädigter, stromaufwärts gelegener Dichtung 5 oder Verkantung des Filterelementes 2 ein Lecken des Mediums aus dem Gehäuseoberteil 1 in Richtung auf den Filtratraum 22 ein, so wird das Medium, in der Regel Flüssigkeit, vom Ringkanal 7, 7′ aus durch den Leckkontrollkanal 8 nach außen abgeführt.

Durch den Druckabfall im Ringkanal 7, 7′ kann das Medium auch nicht mehr die stromabwärts gelegene Dichtung 6 zum Sterilraum 22 überwinden, so daß das Filtrat nicht wieder unsteril wird. Das zu filtrierende Medium hat somit nur die Möglichkeit bestimmungsgemäß durch die Filterlagen des Filterelementes 2 hindurch in den Filtratraum 22 zu fließen.

Sind gemäß Fig. 3 mehr als zwei Ringdichtungen 5, 6, z. B. drei, 5′, 5, 6 an der Endkappe 4′ vorgesehen, so ist der Leckkontrollkanal 8 zweckmäßig stromabwärts zwischen den beiden letzten Ringdichtungen angeordnet.

Der besondere Vorteil des Leckkontrollkanals 8 wird sichtbar, wenn eine Vielzahl solcher Filterelemente an der Peripherie der Zwischenplatte 9 angeordnet sind und durch den jedem Filterelement 2 zugeordneten Leckkontrollkanal eindeutig lokalisiert werden kann, welches Filterelement 2 undicht in der Zwischenplatte 9 gelagert ist und dadurch entsprechende Maßnahmen eingeleitet werden können.

Durch Numerierung der Leckkontrollkanäle 8 auf der Außenseite des Gehäuses und Zuordnung zu den Durchbrechungen 24 läßt sich von außen einwandfrei feststellen, welche der z. B. eingesetzten 20 Filterelemente Undichtigkeiten an den Ringdichtungen 5, 6 zeigt. Die einzelnen Leckkontrollkanäle 8 können an einzelne kleine Auffanggefäße angeschlossen werden, um eine mengenmäßige Kontrolle der Leckflüssigkeit zu erreichen.

### Ansprüche

1. Mehrteiliges Filtergehäuse, welches mit elastischen Dichtungen gegeneinander abgedichtete Bauteile aufweist, insbesondere zur Sterilfiltration von Fluiden, mit einer von außen sichtbaren Leckkontrolleinrichtung für vom Trübraum in den Filtratraum ragende, von Gehäusedurchbrechungen und elastischen Dichtungen umschlossene Stutzen, wobei mehrere patronenförmige Filterelemente mit ihrer Filtereinlaßseite in den von einem glockenförmigen Gehäuseteil gebildeten Trübraum ragen und deren Stutzen auf der Auslaßseite von Durchbrechungen in einer Zwischenwand von Trübraum und Filtratraum dichtend gehalten sind, dadurch gekennzeichnet, daß jede einzelne Gehäusedurchbrechung (23, 24), welche einen aus dem Trübraum heraus in den Filtratraum (22) ragenden Stutzen (4, 11) der Filterelemente (2) bzw. der Gehäusebauteile (9) elastisch dichtend haltert, eine eigene, separate Leckkontrollstelle (8 ; 15, 23) aufweist, die auf der Gehäuseaußenseite endet.

2. Mehrteiliges Filtergehäuse nach Anspruch 1, dadurch gekennzeichnet, daß die Leckkontrollstelle in einer Durchbrechung (24) der Zwischenwand (9) durch einen Leckkontrollkanal (8) gebildet ist, der den Bereich der Durchbrechung (24) zwischen zwei im axialen Abstand angeordneten Ringdichtungen (5, 6) mit der Gehäuseaußenseite verbindet.

3. Mehreteiliges Filtergehäuse nach Anspruch 1 und 2, dadurch gekennzeichnet, daß bei Anordnung von mehr als zwei im axialen Abstand angeordneten Ringdichtungen (5', 5, 6) der Leckkontrollkanal (8) im Bereich zwischen den beiden stromabwärts letzten Ringdichtungen (5, 6) angeordnet ist.

4. Filtergehäuse nach Anspruch 1 bis 3, dadurch gekennzeichnet, daß der Leckkontrollkanal . (8) in einem offenen Ringkanal (7, 7') im Bereich zwischen den beiden Ringdichtungen (5, 6) endet.

5. Filtergehäuse nach Anspruch 1 bis 4, dadurch gekennzeichnet, daß die Zwischenwand zwischen dem Trübraum und Filtratraum (22) mit den Durchbrechungen (24) für die Stutzen (4) der Filterelemente (2) als einstückige Zwischenplatte (9) mit einem integrierten rohrförmigen Stutzen (11, 11') als Einlaß (10) für das zu filtrierende Medium ausgebildet ist, wobei die Zwischenplatte (9) im axialen Abstand zu einer den Filtratraum (22) begrenzenden Basisplatte (12) angeordnet ist und sich peripher auf dieser dichtend abstützt, wobei der Stutzen (11) die Basisplatte (12) unter Einschluß einer elastischen Dichtung (15 bzw. 21) in einer Durchbrechung (23) durchstößt und den Einlaß (10) zum glockenförmigen Gehäuseteil (1) des Trübraumes bildet.

6. Filtergehäuse nach Anspruch 1 und 5, dadurch gekennzeichnet, daß der Stutzen (11) in der Durchbrechung (23) der Basisplatte (12) durch eine O-Ringdichtung (15) abgedichtet ist.

7. Filtergehäuse nach Anspruch 1 und 5, dadurch gekennzeichnet, daß der Stutzen (11') einen sich auf den Rand der Durchbrechung (23) der Basisplatte (12) aufsetzenden Flansch (20) mit Dichtung (21) aufweist.

### Claims

1. Multi-part filter housing, which displays components sealed off one from the other by elastic seals, particularly for the sterile filtration of fluids, with a leakage checking equipment, viewable from the outside, for stubs which project from the filling chamber into the filtrate chamber and are enclosed by housing passages and elastic seals, wherein several cartidge-like filter elements protrade by their filter inlet side into the filling chamber formed by a bell-shaped housing part and their stubs on the outlet side are sealingly held in a partition wall of filling chamber and filtrate chamber, characterised thereby, that each individual housing passage (23, 24), which elastically sealing retains one of the stubs (4, 11) of the filter elements (2) and the housing components (9), respectively, which stubs project out of the filling chamber into the filtrate chamber, displays its own separate leakage check place (8 ; 15, 23), which ends on the outside of the housing.

2. Multi-part filter housing according to claim 1, characterised thereby, that the leakage check place is formed in a passage (24) of the partition wall (9) by a leakage check channel (8), which connects the region of the passage (24) between two ring seals (5,6) arranged at an axial spacing with the outside of the housing.

3. Multi-part filter housing according to claim 1 and 2, characterised thereby, that in the case of an arrangement of more than two ring seals (5', 5, 6) arranged at an axial spacing, the leakage check channel (8) is arranged in the region between both the ring seals (5, 6) last downstream.

4. Filter housing according to claim 1 to 3, characterised thereby, that the leakage check channel (8) ends in an open annular channel (7, 7') in the region between both the ring seals (5, 6).

5. Filter housing according to claim 1 to 4, characterised thereby, that the partition wall between the filling chamber and the filtrate chamber (22) with the passages (24) for the stubs (4) of the filter elements (2) is constructed as one-piece intermediate plate (9) with an integrated tubular stub (11, 11') as inlet (10) for the medium to be filtered, wherein the intermediate plate (9) is arranged at an axial spacing from a base plate (12) bounding the filtrate chamber (22) and sealingly bears on this circumferentially, wherein the stub (11) penetrates the base plate (12) with the inclusion of an elastic seal (15 or 21) in a passage (23) and forms the inlet (10) to the bell-shaped housing part (1) of the filling chamber.

6. Filter housing according to claim 1 and 5, characterised thereby, that the stub (11) in the passage (23) of the base plate (12) is sealed off by an O-ring seal (15).

7. Filter housing according to claim 1 and 5, characterised thereby, that the stub (11') displays a flange (20) with seal (21) sitting on the rim of the passage (23) of the base plate (12).

## Revendications

1. Boîtier de filtre en plusieurs parties, qui présente des organes structurels isolés hermétiquement les uns des autres par des garnitures élastiques d'étanchement, en particulier pour la filtration stérile de fluides, comportant un dispositif de contrôle des fuites visible de l'extérieur, pour des manchons pénétrant dans la chambre à filtrat à partir de la chambre non stérile et entourés par des orifices du boîtier et par des garnitures élastiques d'étanchement, plusieurs éléments de filtration du type cartouches pénétrant par leur côté admission dans la chambre non stérile délimitée par une partie en forme de cloche du boîtier et les manchons de ces éléments étant maintenus en place hermétiquement, sur leur côté évacuation, par des orifices ménagés dans une cloison intermédiaire entre la chambre non stérile et la chambre à filtrat, boîtier caractérisé par le fait que chaque orifice individuel (23, 24) du boîtier, qui maintient en place hermétiquement et élastiquement un manchon (4, 11) des éléments de filtration (2) ou des organes structurels (9) du boîtier sortant de la chambre non stérile pour pénétrer dans la chambre (22) à filtrat, présente une zone individuelle séparée (8 ; 15, 23) de contrôle des fuites qui s'achève à la face externe dudit boîtier.

2. Boîtier de filtre en plusieurs parties selon la revendication 1, caractérisé par le fait que la zone de contrôle des fuites est formée, dans un orifice (24) de la paroi intermédiaire (9), par un canal (8) de contrôle des fuites qui relie au côté externe du boîtier la région de l'orifice (24) comprise entre deux garnitures annulaires d'étanchement (5, 6) distantes axialement l'une de l'autre.

3. Boîtier de filtre en plusieurs parties selon les revendications 1 et 2, caractérisé par le fait que, en cas d'agencement de plus de deux garnitures annulaires d'étanchement (5', 5, 6) distantes mutuellement dans le sens axial, le canal (8) de contrôle des fuites se trouve dans la région comprise entre les deux garnitures annulaires d'étanchement (5, 6) occupant les dernières positions en aval.

4. Boîtier de filtre selon les revendications 1 à 3, caractérisé par le fait que le canal (8) de contrôle des fuites s'achève dans un canal annulaire ouvert (7, 7') dans la région comprise entre les deux garnitures annulaires d'étanchement (5, 6).

5. Boîtier de filtre selon les revendications 1 à 4, caractérisé par le fait que la cloison intermédiaire entre la chambre non stérile et la chambre (22) à filtrat, dans laquelle sont élaborés les orifices (24) destinés aux manchons (4) des éléments de filtration (2), est réalisée sous la forme d'une plaquette intermédiaire monobloc (9) munie d'un manchon tubulaire solidaire (11, 11') en guise de raccord d'admission (10) du fluide devant être filtré, ladite plaquette intermédiaire (9) étant située à une distance axiale d'une plaque de base (12) qui délimite la chambre (22) à filtrat, et étant hermétiquement en appui par sa périphérie sur cette plaque de base, le manchon (11) traversant ladite plaque de base (12) en emprisonnant une garniture élastique d'étanchement (15 ou 21) dans un orifice (23) et formant le raccord d'admission (10) vers la partie (1) en forme de cloche du boîtier qui délimite la chambre non stérile.

6. Boîtier de filtre selon les revendications 1 et 5, caractérisé par le fait que, dans l'orifice (23) de la plaque de base (12), le manchon (11) est isolé hermétiquement par un joint torique d'étanchéité (15).

7. Boîtier de filtre selon les revendications 1 et 5, caractérisé par le fait que le manchon (11') présente un collet (20) muni d'une garniture d'étanchement (21) et prenant appui sur le bord de l'orifice (23) de la plaque de base (12).

Fig. 1

Fig. 2

Fig. 3